# EUROPEAN PATENT APPLICATION

(11) **EP 3 196 557 A1**
(43) Date of publication of application: **26.07.2017**
(21) Application number: 16152521.7
(22) Date of filing: 25.01.2016
(51) Int. Cl.: F24D 3/18, F25B 13/00, F24D 17/02, F24D 19/10, F24F 3/08, F24F 5/00

(54) **BRINE/WATER HEAT PUMP SYSTEM**

(71) Applicant: Vaillant GmbH, 42859 Remscheid (DE)
(72) Inventor: Cruz, Santiago Cid, 01010 Vitoria (Araba) (ES)
(74) Representative: Hocker, Thomas

(57) **Abstract**

The present invention discloses a heat pump system including a first circuit, a second circuit, a sanitary water heating circuit, and a water tank. The first circuit includes a compressor, a first heat exchanger downstream of the compressor for operating as a condenser in a heating mode and operating as an evaporator in a cooling mode, a throttling device downstream of the first heat exchanger, and a second heat exchanger downstream of the throttling device for operating as an evaporator in the heating mode and operating as a condenser in the cooling mode. The second circuit has a working medium circulated therein, and it is connected to the first circuit via the second heat exchanger. The sanitary water heating circuit is connected to the first circuit via the first heat exchanger. The water tank contains a first heat exchange unit connected to the sanitary water heating circuit and a second heat exchange unit connected to the second circuit, wherein the first and the second heat exchange units are selectively operable to heat sanitary water within the tank.

## Description

### FIELD OF THE INVENTION

The present invention relates to a heat pump system, and more particularly to a brine/water heat pump system capable of performing sanitary water heating, space heating, and space cooling.

### BACKGROUND OF THE INVENTION

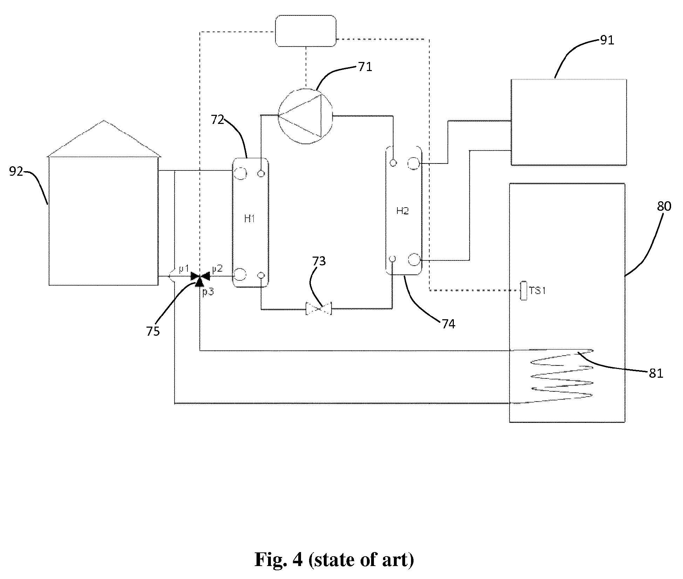

Fig.4 shows a brine/water heat pump system in the state of art. The system includes a refrigerant circuit, a brine circuit, a sanitray water heating circuit, and a space heating/cooling circuit. The refrigerant circuit includes a compressor 71 for compressing a refrigerant, a first heat exchanger 72 for cooling the refrigerant in a heating mode and vaporizing the refrigerant in a cooling mode, an expansion valve 73 for lowing the pressure of the refrigerant, and a second heat exchanger 74 for vaporizing the refrigerant in the heating mode and cooling the refrigerant in the cooling mode. The heat generated by the sun, wind and rain is stored in the ground. The heat stored in the ground can be collected in a ground collector and conveyed by a brine fluid circulating in the brine circuit. When the refrigerant circuit works in a heating mode, the second heat exchanger 74 operates as an evaporator, and the brine fluid obtains heat from ground source and transfers the heat to the refrigerant passing through the second heat exchanger 74. Meanwhile, the first heat exchanger 72 operates as a condenser, and the refrigerant release heat to a heat transfer medium, such as water passing through the first heat exchanger 72.

A three-way valve 75 is connected between the sanitary water heating circuit and the space heating/cooling circuit. In the heating mode, ports p1 and p2 of the three-way valve 75 are connected, and the heated water passes through the space heating/cooling circuit to dissipate heat into a building 92. When there is a need of supplying hot sanitary water, ports p2 and p3 of the three-way valve 75 are connected, and the heated water passes through a heat exchange coil 81 contained in a water tank 80 via the sanitary water heating circuit for heating sanitary water within the tank. When the refrigerant circuit works in a cooling mode, the second heat exchanger 74 operates as a condenser, and the brine fluid obtains heat from the refrigerant passing through the second heat exchanger 74, and dissipates the heat through a fan 91. In the mean time, the first heat exchanger 72 operates as an evaporator, and the refrigerant absorbs heat from water passing through the first heat exchanger 72, then the cooled water passes through the space heating/cooling circuit to cool interiors of the building 92. In this case, when there is a need of supplying hot sanitary water, the refrigerant circuit has to stop the cooling cycle and start the heating cycle again, at this time, the ports p2 and p3 of the three-way valve 75 are connected, and the sanitary water within the tank can be heated by hot water circulating in the sanitary water heating circuit.

Since hot sanitary water production in the cooling mode has to stop the cooling cycle, it is obvious to reduce experience and satisfaction of users.

### SUMMARY OF THE INVENTION

It is an object of present invention to provide a heat pump system wherein the number of stopping the cooling cycle on hot sanitary water production in the cooling mode is reduced, thereby improving experience and satisfaction of users, also, improving performance and efficiency of the system.

According to one aspect of the present invention there is provided a heat pump system including a first circuit, a second circuit, a sanitary water heating circuit, and a water tank. The first circuit includes a compressor for compressing a refrigerant, a first heat exchanger downstream of the compressor for operating as a condenser to cool the refrigerant in a heating mode and operating as an evaporator to vaporize the refrigerant in a cooling mode, a throttling device downstream of the first heat exchanger for lowering the pressure of the refrigerant, and a second heat exchanger downstream of the throttling device for operating as an evaporator in the heating mode and operating as a condenser in the cooling mode. The second circuit has a working medium circulated therein, and it is connected to the first circuit via the second heat exchanger. The sanitary water heating circuit is connected to the first circuit via the first heat exchanger. The water tank contains a first heat exchange unit connected to the sanitary water heating circuit and a second heat exchange unit connected to the second circuit, wherein the first and the second heat exchange units are selectively operable to heat sanitary water within the tank. In this way, the working medium of the second circuit can be used to heat the sanitary water within the tank in the cooling mode, the cooling cycle running in the first circuit is not necessary to stop every time when there is a need of supplying hot sanitary water, therefore, the number of stopping the cooling cycle on hot sanitary water production in the cooling mode can be reduced, which can obviously improve experience and satisfaction of users.

Preferably, the system further includes a first divert valve disposed in the second circuit and connected to the second heat exchange unit for selectively allowing the working medium to pass through the second heat exchange unit for heating the sanitary water within the tank.

Preferably, the system further includes a space heating/cooling circuit connected to the first circuit via the first heat exchanger, and wherein the space heating/cooling circuit is in parallel with the sanitary water heating circuit.

Preferably, the system further includes a second divert valve connected to the space heating/cooling circuit and the sanitary water heating circuit for switching between operation of the space heating/cooling circuit and operation of the sanitary water heating circuit.

Preferably, the system further includes a first temperature sensor disposed in the tank for detecting a temperature of the sanitary water within the tank, and a second temperature sensor disposed in the second circuit for detecting a temperature of the working medium.

In a preferred embodiment, when there is a need of supplying hot sanitary water in the cooling mode, if the detected temperature of the sanitary water is larger than or equals to the detected temperature of the working medium, the first heat exchange unit is selected to heat the sanitary water within the tank, otherwise, the second heat exchange unit is selected to heat the sanitary water within the tank.

Preferably, the working medium is a brine fluid, or a mixture fluid of brine and water, or only water; and the second circuit includes a ground collector for supplying heat energy stored in the ground in the heating mode and a fan for dissipating heat in the cooling mode.

### BRIEF DESCRIPTION OF THE DRAWINGS

For a more complete understanding of the present invention, and the advantages thereof, reference is now made to the following descriptions taken in conjunction with the accompanying drawings, in which:
Fig.1 is a diagram showing the configuration of a heat pump system in accordance with one embodiment of present invention, wherein the system is working in a space heating/cooling mode;
Fig.2 shows the same heat pump system of Fig.1, wherein the system is working in a space cooling mode, meanwhile, and sanitary water within a water tank is being heated by a second heat exchange unit;
Fig.3 shows the same heat pump system of Fig.1, wherein the system is working in a water heating mode, and sanitary water within the water tank is being heated by a first heat exchange unit;
Fig. 4 is a diagram showing the configuration of a heat pump system in the state of art.

### DETAILED DESCRIPTION OF THE PREFERRED EMBODIMENTS

Reference will now be made to the drawing figures to describe the preferred embodiments of the present invention in detail. However, the embodiments can not be used to restrict the present invention. Changes such as structure, method and function obviously made to those of ordinary skill in the art are also protected by the present invention.

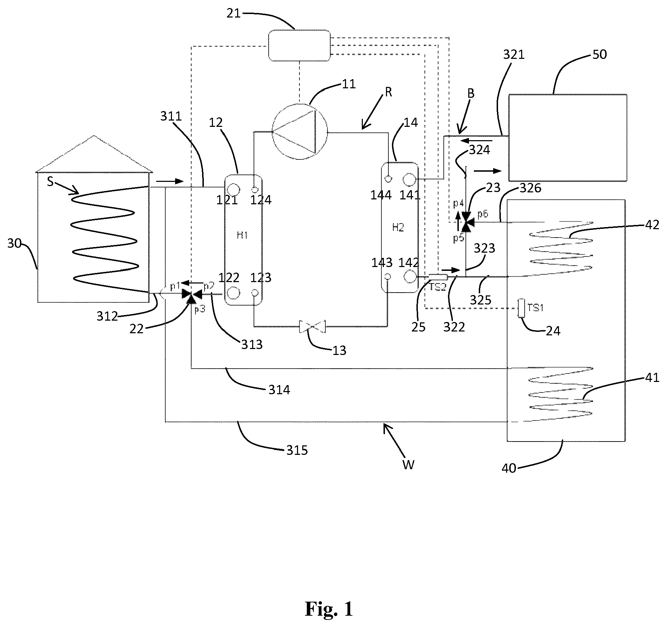

Refer to Fig.1, a heat pump system according to one embodiment of present invention can be used for supplying hot sanitary water, or heating/cooling building interiors. The heat pump system includes a first circuit R, a second circuit B, a sanitary water heating circuit W, and a space heating/cooling circuit S. The first circuit typically includes a compressor 11, a first heat exchanger 12, a throttling device 13, and a second heat exchanger 14. Wherein, the first heat exchanger 12 operates as a condenser in a heating mode and operates as an evaporator in a cooling mode; and the second heat exchanger 14 operates as an evaporator in the heating mode and operates as a condenser in the cooling mode. These components are generally serially connected via conduits or piping, and the operations of these components exemplified in the heating mode will subsequently be described in great detail.

The compressor 11 generally uses electrical power to compress a refrigerant from a low pressure gas state to a high pressure gas state thereby increasing the temperature, enthalpy and pressure of the refrigerant. The refrigerant leaving from the compressor 11 flows through the first heat exchanger 12 via its ports 124 and 123 for being condensed at a substantially constant pressure to a saturated liquid state. In this process, a heat transfer medium, such as water passing through the first heat exchanger 12 via its ports 121 and 122 obtains heat from the refrigerant flow and flows through the space heating/cooling circuit S or sanitary water heating circuit W for heating purpose. The throttling device 13 can take form of an expansion valve for being used to control the amount of refrigerant entering into the second heat exchanger 14. The liquid refrigerant from the first heat exchanger 12 flows through the expansion valve 13, result in the pressure of the liquid is decreased. In the process, the refrigerant evaporates partially causing the refrigerant to change to a mixed liquid-gas state, reducing its temperature down to a value that makes possible heat exchanges in the second heat exchanger 14. The second heat exchanger 14 is a heat exchanger where the heat energy available in a working medium circulating in the second circuit B is transferred to the refrigerant flow that evaporates inside from liquid to gas. The gas refrigerant discharged from the second heat exchanger 14 is sucked into the compressor 11 and becomes a gas state of supper-heating degree that has evaporated beyond the saturated state. The first circuit R can further include a reversing valve, like a four-way valve for inversion of the refrigerant cycle for cooling purpose.

The second circuit B is connected to the first circuit R via the second heat exchanger 14. The second circuit B contains a working medium, such as a brine fluid, a mixture fluid of brine and water, or only water circulating therein. A ground collector and a fan 50 is connected in the second circuit B for respectively supplying heat energy stored in the ground in the heating mode and dissipating heat in the cooling mode. Alternatively, the fan can be also used for heating if there is no possibility of using the ground collector. The heat pump system further includes a water tank 40 containing sanitary water therein. A first heat exchange unit 41 is disposed in the tank 40 and connected to the sanitary water heating circuit W, and a second heat exchange unit 42 is disposed in the tank 40 and connected to the second circuit B via lines 325 and 326. Each of the first and the second heat exchange unit 41, 42 can take form of a coiled tube so that heat carried by a hot water or a hot brine fluid is able to be transferred to sanitary water within the tank 40 when the hot water or the hot brine fluid passes therethrough. A first temperature sensor 24 is disposed in the tank 40 for detecting a temperature of the sanitary water within the tank 40. The space heating/cooling circuit S is placed within a building 30 and allows hot or cold water acting as the heat transfer medium to pass therethrough for heating or cooling the building interiors. The space heating/cooling circuit S is arranged in parallel with the sanitary water heating circuit W, and either of them is selectively connected to the first circuit R via the first heat exchanger 12.

The heat pump system also includes a first divert valve 23 disposed in the second circuit B and connected to the second heat exchange unit 42, a second divert valve 22 connected to the space heating/cooling circuit S and the sanitary water heating circuit W. The first and second divert valve 23, 22 each can be in form of a three-way valve. A second temperature sensor 25 is placed in the second circuit B for detecting a temperature of the working medium. A controller 21 is electrically connected with the electric/electronic components, such as the compressor 11, the first temperature sensor 24, the second temperature sensor 25, the first divert valve 23, and the second divert valve 22. The controller 21 may be an electronic control system incorporating a Micro Controller Unit (MCU).

Refer to Fig.1, in the cooling mode, the first heat exchanger 12 operates as an evaporator, and the second heat exchanger 14 operates as a condenser. In addition, the first three-way valve 23 is actuated by the controller 21 to have its ports P4 and P5 to be fluid communicated, and the second three-way valve 22 is actuated by the controller 21 to have its ports P1 and P2 to be fluid communicated. The working medium, such as the brine fluid obtains heat in the second heat exchanger 14 and leaves from the second heat exchanger at its port 142, then, the brine fluid sequentially flows through lines 322, 323, 324 and dissipates the heat via the fan, after that, the cold brine fluid passes through a line 324 and enters the second heat exchanger 14 via its port 141. The water circulating in the space heating/cooling circuit S is cooled in the first heat exchanger 12 and leaves from the heat exchanger via its port 122, then the water sequentially passes through the lines 313, 312, the space heating/cooling circuit S, and a line 311, and goes back into the first heat exchanger 12 via its port 121. In this process, the cold water passing through the space heating/cooling circuit S absorbs heat within the building 30 so as to cool the building interiors.

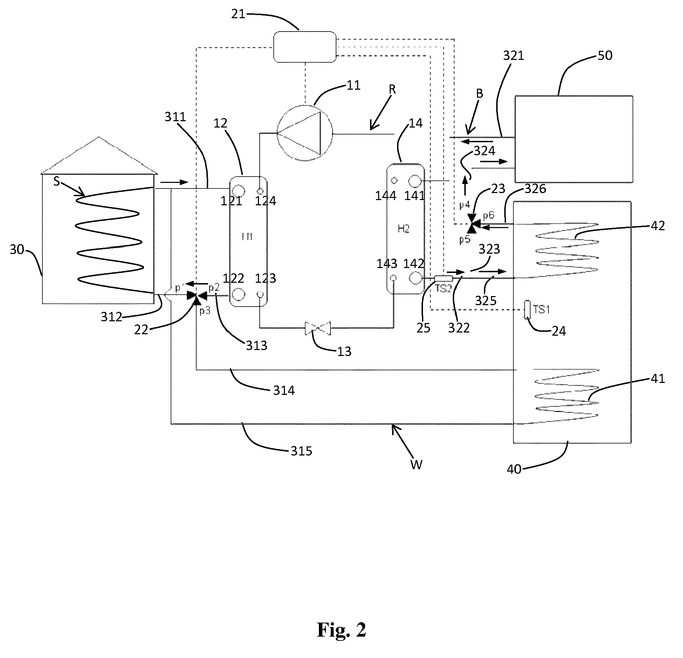

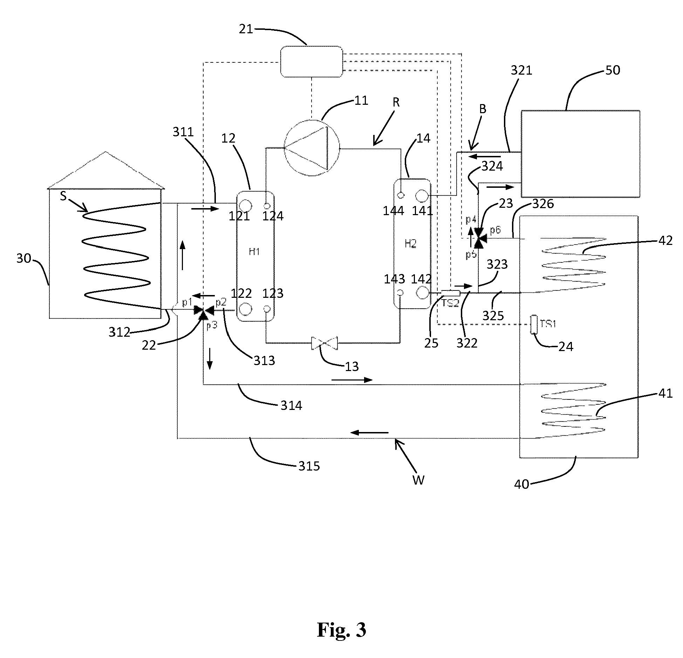

Refer to Figs. 2 and 3, if there is a need of supplying hot sanitary water in the cooling mode, the controller 21 will compare the temperature of the sanitary water detected by the first temperature sensor 24 with the temperature of the working medium, such as the brine fluid detected by the second temperature sensor 25, and if the temperature of sanitary water is larger than or equals to the temperature of the brine fluid, the first heat exchange unit 41 will be selected to heat sanitary water within the tank, otherwise, the second heat exchange unit 42 will be selected to heat sanitary water within the tank. As shown in Fig.2, when the temperature of the brine fluid is larger than the temperature of the sanitary water, the first three-way valve 23 is operated to have its ports P4 and P6 to be fluid connected. The hot brine fluid leaves from the second heat exchanger 14 and sequentially flows through the lines 322, 325, the second heat exchange unit 42, the lines 326, 324, the fan, and goes back to the second heat exchanger 14 via the line 321. In this process, the sanitary water within the tank 40 is heated by the second heat exchange unit 42 where the hot brine fluid transfers heat to the sanitary water, and in the meantime, the cooling cycle is still running in the first circuit R, and the space heating/cooling circuit S cools interiors of the building continuously.

As shown in Fig.3, when the temperature of the sanitary water is larger than or equals to the temperature of the working medium, such as the brine fluid, the brine fluid is not able to heat the sanitary water within the tank 40, therefore, the cooling cycle in the first circuit R has to be stopped and switched to the heating cycle. The first three-way valve 23 is controlled to have its ports P4 and P5 to be fluid connected, and the second three-way valve 22 is controlled to have its ports P2 and P3 to be fluid connected. The hot water leaves from the first heat exchanger 12 and sequentially passes through the lines 313, 314, the first heat exchange unit 41, and lines 315, 311, then goes back into the first heat exchanger 12. When the hot water passes through the first heat exchange unit 41, the heat carried by the hot water is transferred to the sanitary water within the water tank.

Since the working medium of the second circuit can be used to heat the sanitary water within the tank in the cooling mode, the cooling cycle running in the first circuit is not necessary to stop every time when there is a need of supplying hot sanitary water, therefore, the number of stopping the cooling cycle on hot sanitary water production in the cooling mode can be reduced, which can obviously improve experience and satisfaction of users. Moreover, the heat absorbed by the working medium can be reused, which results in improving the energy efficiency of the system. Furthermore, when the working medium of the second circuit is used to heat sanitary water, the working medium can be super-cooled, and it returns to the second heat exchanger 14 with a much lower temperature, thereby improving performance and efficiency of the system.

It is to be understood, however, that even though numerous, characteristics and advantages of the present invention have been set forth in the foregoing description, together with details of the structure and function of the invention, the disclosed is illustrative only, and changes may be made in detail, especially in matters of number, shape, size, and arrangement of parts within the principles of the invention to the full extent indicated by the broadest general meaning of the terms in which the appended claims are expressed.

## Claims

1. A heat pump system comprising:
a first circuit (R) comprising a compressor (11) for compressing a refrigerant, a first heat exchanger (12) downstream of the compressor for operating as a condenser to cool the refrigerant in a heating mode and operating as an evaporator to vaporize the refrigerant in a cooling mode, a throttling device (13) downstream of the first heat exchanger for lowering the pressure of the refrigerant, and a second heat exchanger (14) downstream of the throttling device for operating as an evaporator in the heating mode and operating as a condenser in the cooling mode;
a second circuit (B) having a working medium circulated therein, said second circuit being connected to the first circuit via the second heat exchanger;
a sanitary water heating circuit (W) connected to the first circuit via the first heat exchanger; and
a water tank (40) containing a first heat exchange unit (41) connected to the sanitary water heating circuit and a second heat exchange unit (42) connected to the second circuit, wherein said first and said second heat exchange units are selectively operable to heat sanitary water within the tank.

2. A heat pump system according to claim 1, further comprising a first divert valve (23) disposed in the second circuit and connected to the second heat exchange unit for selectively allowing the working medium to pass through the second heat exchange unit.

3. A heat pump system according to claim 2, further comprising a space heating/cooling circuit (S) connected to the first circuit via the first heat exchanger, and wherein said space heating/cooling circuit is in parallel with the sanitary water heating circuit.

4. A heat pump system according to claim 3, further comprising a second divert valve (22) connected to the space heating/cooling circuit and the sanitary water heating circuit for switching between operation of the space heating/cooling circuit and operation of the sanitary water heating circuit.

5. A heat pump system according to claim 1, further comprising a first temperature sensor (24) disposed in the tank for detecting a temperature of the sanitary water within the tank, and a second temperature sensor (25) disposed in the second circuit for detecting a temperature of the working medium.

6. A heat pump system according to claim 5, wherein when there is a need of supplying hot sanitary water in the cooling mode, if the detected temperature of the sanitary water is larger than or equals to the detected temperature of the working medium, the first heat exchange unit (41) is selected to heat the sanitary water within the tank, otherwise, the second heat exchange unit (42) is selected to heat the sanitary water within the tank.

7. A heat pump system according to claim 1, wherein the working medium is a brine fluid, or a mixture fluid of brine and water, or only water; and the second circuit includes a ground collector for supplying heat energy stored in the ground in the heating mode and a fan for dissipating heat in the cooling mode.
